# EUROPÄISCHE PATENTSCHRIFT

(11) **EP 3 234 275 B1**
(45) Veröffentlichungstag und Bekanntmachung des Hinweises auf die Patenterteilung: **02.02.2022**
(21) Anmeldenummer: 14823981.7
(22) Anmeldetag: 19.12.2014
(51) Int. Cl.: E04C 2/04

(54) **GIPSPLATTE MIT PCM-SPEICHERMATERIAL**
GYPSUM BOARD WITH PCM MEMORY MATERIAL
PLAQUE DE PLÂTRE CONTENANT UN MATÉRIAU ACCUMULATEUR À CHANGEMENT DE PHASE

(43) Veröffentlichungstag der Anmeldung: 25.10.2017
(73) Patentinhaber: Knauf Gips KG, 97346 Iphofen (DE)
(72) Erfinder: BERNETH, Claus-Peter, 97340 Marktbreit (DE); VIEBAHN, Michael, 97346 Iphofen (DE); SCHRÖR, Jörn, 58313 Herdecke (DE); STRIEDER, Birgit, 44795 Bochum (DE); KAISER, Uwe, 58313 Herdecke (DE)
(74) Vertreter: dompatent von Kreisler Selting Werner - Partnerschaft von Patent- und Rechtsanwälten mbB
(86) Internationale Anmeldenummer: PCT/EP2014/078804
(87) Internationale Veröffentlichungsnummer: WO 2016/096048

(56) Entgegenhaltungen:
- WO-A1-96/39473
- WO-A1-03/016650
- WO-A1-2010/099861
- CN-A- 102 518 247
- DE-A1- 10 149 414
- DE-A1-102004 011 541
- DE-U1- 20 305 942
- DE-U1-202008 007 790

## Beschreibung

Die vorliegende Erfindung betrifft wärmespeichernde Gipsplatten.

Gipsplatten, insbesondere Gipsfaserplatten und Gipskartonplatten finden vielfältigen Einsatz in Trockenbaukonstruktionen. In diesem sogenannten Leichtbau entstehen im Vergleich zu Bauwerken aus Stein oder Beton weniger Wärmespeichermassen. Bei modernen Baukonzepten wird Beton häufig nur noch für tragende Elemente in der Konstruktion berücksichtigt, während sonstige Elemente in Leichtbauweise ausgeführt werden. Damit tritt das Problem auf, dass immer weniger Masse zur Wärmespeicherung zur Verfügung steht. Dies führt bei hohen Außentemperaturen dazu, dass sich die Gebäude schneller aufheizen und bei kalten Temperaturen dazu, dass die Gebäude schneller auskühlen. Beides führt zu einem erhöhten Energieaufwand für die Klimatisierung oder Beheizung des Gebäudes.

Es ist bekannt, die Wände eines Gebäudes, und zwar sowohl die tragenden Wände als auch die Leichtbauelemente, mit einem Phasenübergangsmaterial zu beschichten oder diese einzubauen. Solche Phasenübergangsmaterialien ("Phase Change Materials" = PCM) werden dabei so ausgewählt, dass bei den bei der Gebäudeklimatisierung vorkommenden Temperaturen ein Phasenübergang eintritt, der auf Grund der Umwandlungsenthalpie zur Wärmespeicherung beiträgt. Typische Phasenübergangstemperaturen solcher Materialien liegen zwischen etwa 18 und 25°C.

US 4,988,543 betrifft ein Verfahren, bei dem eine Seite einer Bauplatte, beispielsweise einer Gipsplatte, mit einem Phasenübergangsmaterial imprägniert wird.

WO 03/016650 betrifft die Verwendung von Phasenübergangsmaterialien in Form von Mikrokapseln, die in Gipskartonplatten eingebracht werden.

Unverkapselte PCMs weisen - wie in der WO 03/016650 beschrieben - das Problem auf, dass - insbesondere bei paraffinbasierten PCM - die Materialien in die Raumluft abgegeben werden können, wodurch sich die Verwendung von verkapselten PCMs stärker etabliert hat. Eine Gipsplatte nach dem Oberbegriff des Anspruchs 1 ist aus der DE 10149414 A bekannt.

Es besteht jedoch weiterhin Bedarf nach Leichtbauelementen, die hohe Wärmekapazität aufweisen.

Aufgabe der vorliegenden Erfindung war es, solche Elemente bereitzustellen.

Gelöst wird die Aufgabe durch eine Gipsplatte nach Anspruch 1.

Erfindungsgemäß wird also eine Gipsplatte bereitgestellt. Die erfindungsgemäße Gipsplatte weist mindestens zwei Bereiche auf, nämlich mindestens einen Speicherbereich (2) und mindestens einen Befestigungsbereich (4).

In jedem Speicherbereich (2) sind mehrere Behälter (3) angeordnet. Die Befestigungsbereiche (4) weisen im Gegensatz hierzu keine Behälter auf.

In einer bevorzugten Ausführungsform weist die erfindungsgemäße Gipsplatte mindestens vier Befestigungsbereiche auf. In einer Ausführungsform der Erfindung liegen diese im Randbereich der Platte. Insbesondere kann es sich bei den Befestigungsbereichen um einen mindestens 3 cm breiten Bereich handeln, der von der Kante der Gipsplatte aus gemessen wird. Bevorzugt liegt die Breite der Befestigungsbereiche im Bereich von 5 bis 15 cm.

In einer weiteren Ausführungsform weist die erfindungsgemäße Gipsplatte eine Vielzahl von Befestigungsbereichen auf. Diese liegen z.B. punktuell auf der Platte verteilt. Insbesondere sind diese punktuelle Befestigungsbereiche so verteilt, dass durch sie die Stabilität der Platte erhöht wird.

Die Tatsache, dass es sich um Bereiche handelt, die frei von Behältern sind, macht es einfach, im Befestigungsbereich Befestigungsmittel, beispielsweise Schrauben, anzubringen, ohne Gefahr zu laufen, Behälter zu beschädigen.

In einer Ausführungsform der Erfindung liegt das Verhältnis der Oberflächen der Speicherbereiche zur Oberfläche der Befestigungsbereiche im Bereich von 80:20 bis 95:5, mit anderen Worten, die Speicherbereiche belegen, bezogen auf die Gesamtfläche der Platte, 80 bis 95%. Innerhalb der Speicherbereiche sind mindestens 30% der Fläche mit Behältern (3) versehen. Ein Speicherbereich umfasst also Bereiche, die Behälter enthalten, als auch Bereiche, die keine Behälter aufweisen.

Zur Aufnahme der Behälter weist der Speicherbereich erfindungsgemäß Ausfräsungen auf, in denen die Behälter angeordnet sind. Dabei können die Ausfräsungen im Platten-Querschnitt rechteckig, u-förmig oder Ω-förmig ausgebildet sein.

Bei Ω-förmigen Ausfräsungen können die Behälter so geformt sein, dass sie in die Ausfräsungen eingeklickt werden können. Als Form für die Behälter eignen sich Zylinder-, Stab- und Quaderformen; für einklickbare Varianten wären auch Trapezprismen besonders geeignet. Die Öffnung der Platte zur Aufnahme der Behälter müssen entsprechend an die Behälterform angepasst sein.

Es ist grundsätzlich möglich, dass alle verwendeten Behälter in einem Speicherbereich die gleiche Größe haben, aber es sind auch verschieden große Behälter, die gemischt eingesetzt werden, verwendbar. Als Größen haben sich Volumina von 10.000 bis 200.000 mm³ als geeignet erwiesen.

Typische Gipsplatten haben Dicken von beispielsweise 9,5 oder 12,5 mm; es sind aber auch Platten mit deutlich größeren Stärken auf dem Markt. Erfindungsgemäß ist die Behältergröße so gewählt, dass in den Bereichen, in denen die Behälter eingesetzt werden, noch mindestens 30% der Plattendicke erhalten bleiben, um eine hinreichende mechanische Stabilität zu ermöglichen. Dabei werden die Behälter vorzugsweise oberflächennah an der Raumseite der Platte angeordnet, um einen guten Kontakt mit der Raumluft und einen guten Wärmeaustausch zu gewährleisten.

Als Material für die Behälter eignen sich insbesondere Kunststoff, Aluminium oder Verbundmaterialien aus Kunststoff und Aluminium. Grundsätzlich sind auch andere Metalle verwendbar.

Die erfindungsgemäßen Behälter können beispielsweise in gleichmäßigen Abständen parallel angeordnet werden. Es können auch mehrere Einzelbehälter innerhalb einer längeren Ausfräsung angeordnet sein. Neben Behältern, die eine eher längliche Form haben, sind auch Behälter denkbar, die flach sind und dadurch eine größere Kontaktfläche zur Umgebung haben. Die erfindungsgemäßen Behälter werden bevorzugt in den Öffnungen der Gipsplatte vergossen oder verspachtelt, so dass die Wärmeleitung über die Masse der Platte erfolgt.

Als Phasenübergangsmaterialien eignen sich insbesondere Salzhydratmischungen oder Paraffinmischungen. Dabei können alle Behälter einheitlich gefüllt sein oder mit verschiedenen Phasenübergangsmaterialien gefüllt sein.

Bevorzugt liegen die Temperaturbereiche des Phasenübergangs im Bereich von 20 bis 30°C, so dass die Materialien bei einer Erhöhung der Temperatur entsprechende Wärme aufnehmen und bei Unterschreiten der Temperatur wieder abgeben. Niedrigere Phasenbergangstemperaturen werden als nicht sinnvoll erachtet, da erfahrungsgemäß die Raumtemperaturen ein niedrigeres Niveau nicht erreichen.

Es kann in einigen Ausführungsformen sinnvoll sein, Behälter mit gestaffelten Phasenübergangstemperaturen zu verwenden, beispielsweise einen Behälter mit einem Phasenübergangsmaterial mit einem Phasenübergang im Bereich von 22°C und einen zweiten im Bereich von 26°C, um über einen größeren Temperaturbereich eine Klimatisierung des Raumes zu ermöglichen.

Als Salzhydratmischung eignen sich Mischungen auf der Basis von Halogeniden, insbesondere von Chloriden, aber auch von Bromiden sowie auf Basis von Acetaten, Citraten oder Sulfaten. Bevorzugt handelt es sich Alkali- oder Erdalkaliverbindungen, z.B. Calciumchlorid, Magnesiumchlorid, Natriumchlorid, Magnesiumbromid, Calciumbromid, Kaliumbromid, Natriumacetat, Kaliumcitrat oder Natriumsulfat. Dabei ist insbesondere der Wassergehalt der Salzhydratmischung sorgfältig auf den gewünschten Schmelzbereich abzustimmen.

Als Paraffinmischungen eignen sich insbesondere solche, die in der WO 03/016650 beschrieben sind.

Erfindungsgemäß kann es sich bei der Gipsplatte beispielsweise um eine Gipskartonplatte oder eine Gipsfaserplatte handeln. Der Gips kann weitere Zusätze, wie Graphitfasern oder Graphit, Siliciumcarbid, Magnesiumoxid, Magnesiumhydroxid, Metalle, Aluminiumoxid, Aluminiumnitrid oder Bornitrid enthalten, insbesondere solche Zusätze, die die Wärmeleitfähigkeit erhöhen. Bevorzugt liegt der Gehalt zwischen 0,1 und 20 Gew.-% oder 1 und 15 Gew.-% bezogen auf den trockenen Gips.

In einer Ausführungsform werden die Behälter aktiv regeneriert. Dabei können beispielsweise die erfindungsgemäßen Gipsplatten rückseitig mit einem wasserführenden Rohrsystem ausgestattet sein, durch das zur Regenerierung temperiertes Medium, z.B. Wasser geleitet wird. In einer weiteren Ausführungsform können beispielsweise Kapillarrohrmatten in die erfindungsgemäßen Gipsplatten eingebettet werden, durch die zur Regenerierung temperiertes Medium, z.B. Wasser geleitet wird. In einer weiteren Ausführung können beispielsweise die erfindungsgemäßen Gipsplatten gezielt von einem Lüftungssystem angeblasen werden, das zur Regenerierung entweder kühle Nachtluft oder anderweitig vortemperierte Luft zuführt.

In einigen Ausführungsformen weisen die Befestigungsbereiche eine optische Markierung auf, die es dem Fachmann bei der Montage erleichtert, die entsprechenden Bereiche zu erkennen.

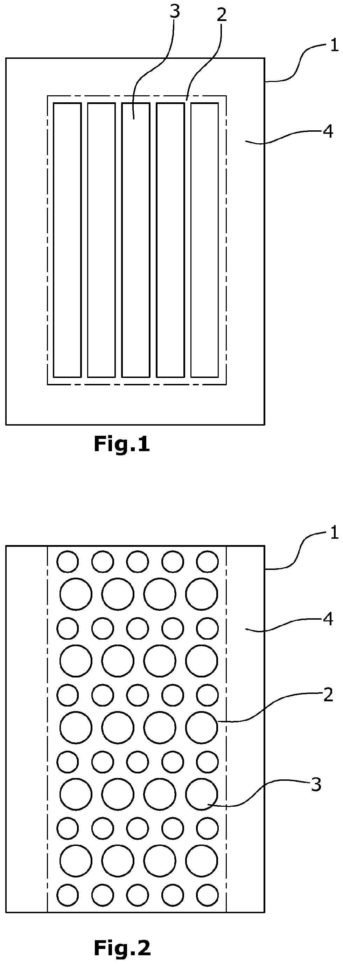

Figur 1 zeigt eine Gipsplatte (1), mit einem Speicherbereich (2) ist, in dem Behälter angeordnet sind, und Befestigungsbereiche (4) vorliegen, in denen keine Behälter angeordnet sind. In dem Speicherbereich (2) sind Ausfräsungen vorhanden, in die längliche Behälter aufgenommen werden.
Figur 2 zeigt eine Gipsplatte (1), mit einem Speicherbereich (2), in dem scheibenförmige Behälter (3) angeordnet sind. Zusätzlich weist die Gipsplatte Befestigungsbereiche (4) auf, die im Randbereich der Platte liegen.

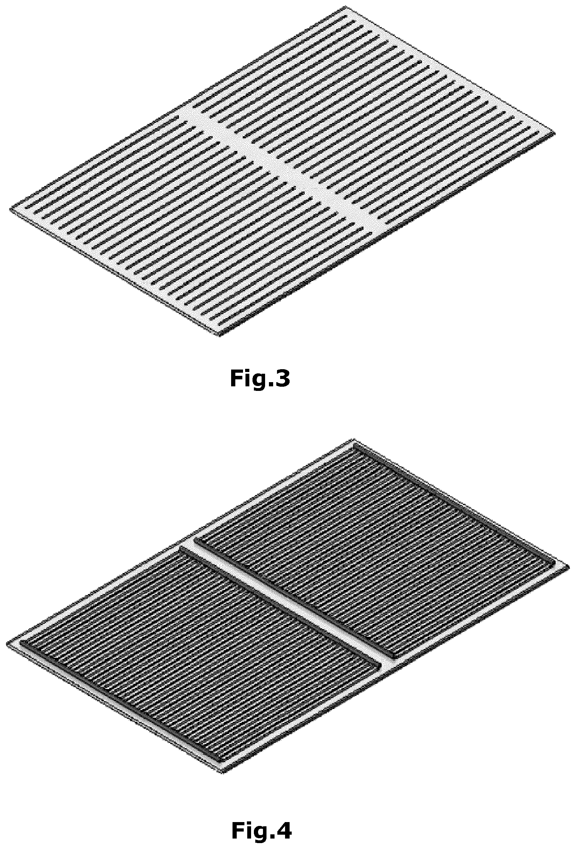

Figur 3 ist eine perspektivische Ansicht einer erfindungsgemäßen Gipsplatte mit zwei Speicherbereichen und drei Befestigungsbereichen, wovon einer zwischen den Speicherbereichen liegt.
Figur 4 ist die Gipsplatte aus Figur 3, die zusätzlich noch Schläuche für ein Medium zur Regeneration des PCM umfasst.

## Patentansprüche

1. Gipsplatte, wobei die Gipsplatte (1) mindestens einen Speicherbereich (2) aufweist, in dem Behälter (3) angeordnet sind, die Phasenübergangsmaterial (5) enthalten und mindestens einen Befestigungsbereich (4) aufweist, in dem keine Behälter angeordnet sind, wobei die Speicherbereiche Ausfräsungen aufweisen, in denen die Behälter angeordnet sind, **dadurch gekennzeichnet, dass** in den Bereichen, in denen Behälter eingesetzt werden, mindestens 30% der Plattendicke erhalten bleibt.

2. Gipsplatte nach Anspruch 1, wobei mindestens vier Befestigungsbereiche (4) vorhanden sind.

3. Gipsplatte nach Anspruch 2, wobei genau zwei der vier Befestigungsbereiche (4) Randbereiche der Platte sind.

4. Gipsplatte nach einem der Ansprüche 1 bis 3, wobei das Verhältnis der Oberflächen der Speicherbereiche (2) zu der Oberfläche der Befestigungsbereiche (4) im Bereich 80:20 bis 95:5 liegt.

5. Gipsplatte nach einem der Ansprüche 1 bis 4, wobei die Befestigungsbereiche (4) an den längeren Seiten der Gipsplatte liegen und eine Breite von 3 bis 15 cm aufweisen.

6. Gipsplatte nach einem der Ansprüche 1 bis 5, wobei es sich um eine Gipskarton- oder eine Gipsfaserplatte handelt.

7. Gipsplatte nach einem der Ansprüche 1 bis 6, wobei der Gips weitere Zusätze, wie Graphitfasern, Graphit, Siliciumcarbid, Magnesiumoxid, Magnesiumhydroxid, Metalle, Aluminiumoxid, Aluminiumnitrid oder Bornitrid aufweist.

8. Gipsplatte nach einem der Ansprüche 1 bis 7, wobei die Ausfräsungen im Querschnitt rechteckig, u-förmig oder Ω-förmig ausgebildet sind.

9. Gipsplatte nach einem der Ansprüche 1 bis 8, wobei die Behälter ein Volumen von 10.000 bis 200.000 mm³ aufweisen.

10. Gipsplatte nach einem der Ansprüche 1 bis 9, wobei das Material der Behälter aus Kunststoff, Aluminium oder einem Verbund von Kunststoff und Aluminium besteht.

11. Gipsplatte nach einem der Ansprüche 1 bis 10, wobei die Phasenübergangsmaterialien ausgewählt werden aus Salzhydratmischungen und Paraffinmischungen.

12. Gipsplatte nach einem der Ansprüche 1 bis 11, wobei innerhalb der Gipsplatte Behälter mit verschiedenen Phasenübergangsmaterialien eingesetzt werden.

13. Gipsplatte nach einem der Ansprüche 1 bis 12, wobei Vorrichtungen enthalten sind, mit denen die Behälter regeneriert werden können.

14. Gipsplatte nach einem der Ansprüche 1 bis 13, wobei die Behälter in den Öffnungen der Gipsplatte vergossen oder verspachtelt werden.

15. Verwendung einer Gipsplatte nach einem der Ansprüche 1 bis 14 zur Klimatisierung von Gebäuden.

## Claims

1. A gypsum board, wherein said gypsum board (1) has at least one storage zone (2) in which containers (3) are provided that contain phase-transition materials (5), and has at least one attachment zone (4) in which no containers are provided, wherein said storage zones have milling grooves in which the containers are provided, wherein at least 30% of the board thickness is retained in the zones in which containers are employed.

2. The gypsum board according to claim 1, wherein at least four attachment zones (4) are present.

3. The gypsum board according to claim 2, wherein exactly two of the four attachment zones (4) are peripheral zones of the board.

4. The gypsum board according to any of claims 1 to 3, wherein the ratio of the surface areas of the storage zones (2) to the surface area of the attachment zones (4) is within a range of from 80:20 to 95:5.

5. The gypsum board according to any of claims 1 to 4, wherein said attachment zones (4) are provided at the longer sides of the gypsum plate and have a width of from 3 to 15 cm.

6. The gypsum board according to any of claims 1 to 5, wherein said gypsum board is a gypsum plasterboard or a gypsum fiberboard.

7. The gypsum board according to any of claims 1 to 6, wherein said gypsum contains further additives, such as graphite fibers or graphite, silicon carbide, magnesium oxide, magnesium hydroxide, metals, aluminum oxide, aluminum nitride, or boron nitride.

8. The gypsum board according to any of claims 1 to 7, wherein said milling grooves have rectangular, U-shaped or Ω-shaped designs in cross-section.

9. The gypsum board according to any of claims 1 to 8, wherein said containers have a volume of from 10,000 to 200,000 mm³.

10. The gypsum board according to any of claims 1 to 9, wherein the material of the containers is plastics, aluminum or a composite of plastics and aluminum.

11. The gypsum board according to any of claims 1 to 10, wherein said phase-transition materials are selected from salt hydrate mixtures and paraffin mixtures.

12. The gypsum board according to any of claims 1 to 11, wherein containers with different phase-transition materials are employed within said gypsum board.

13. The gypsum board according to any of claims 1 to 12, wherein devices are contained by means of which the containers can be regenerated.

14. The gypsum board according to any of claims 1 to 13, wherein said containers are fixed by casting or filling within the openings of the gypsum board.

15. Use of a gypsum board according to any of claims 1 to 14 for the air-conditioning of buildings.

## Revendications

1. Plaque de plâtre, dans laquelle la plaque de plâtre (1) comporte au moins une zone accumulatrice (2), à l'intérieur de laquelle sont disposés des contenants (3) qui contiennent du matériau à changement de phase (5), et au moins une zone de fixation (4), à l'intérieur de laquelle n'est disposé aucun contenant, dans laquelle les zones accumulatrices comportent des fraisures à l'intérieur desquelles sont disposés les contenants, **caractérisée en ce que** dans les zones où des contenants sont insérés, au moins 30 % de l'épaisseur de la plaque est maintenue.

2. Plaque de plâtre selon la revendication 1, dans laquelle au moins quatre zones de fixation (4) sont présentes.

3. Plaque de plâtre selon la revendication 2, dans laquelle exactement deux des quatre zones de fixation (4) sont des zones de bord de la plaque.

4. Plaque de plâtre selon l'une des revendications 1 à 3, dans laquelle la proportion de la surface de zone accumulatrice (2) par rapport à la surface de zone de fixation (4) est comprise dans un intervalle de 80:20 à 95:5.

5. Plaque de plâtre selon l'une des revendications 1 à 4, dans laquelle les zones de fixation (4) sont situées sur les côtés longitudinaux des plaques de plâtre et comportent une largeur de 3 à 15 cm.

6. Plaque de plâtre selon l'une des revendications 1 à 5, dans laquelle il s'agit d'une plaque de plâtre armé de fibre ou de plâtre cartonné.

7. Plaque de plâtre selon l'une des revendications 1 à 6, dans laquelle le plâtre comporte des additifs ultérieurs, comme des fibres de graphite, du graphite, du carbure de silicium, de l'oxyde de magnésium, de l'hydroxyde de magnésium, des métaux, de l'oxyde d'aluminium, du nitrure d'aluminium ou du nitrure de bore.

8. Plaque de plâtre selon l'une des revendications 1 à 7, dans laquelle les fraisures sont réalisées avec une section rectangulaire, en U ou en Ω.

9. Plaque de plâtre selon l'une des revendications 1 à 8, dans laquelle les contenants comportent un volume de 10.000 à 200.000 mm³.

10. Plaque de plâtre selon l'une des revendications 1 à 9, dans laquelle le matériau des contenants est constitué de plastique, d'aluminium ou d'un composite de plastique et d'aluminium.

11. Plaque de plâtre selon l'une des revendications 1 à 10, dans laquelle les matériaux à changement de phase sont sélectionnés parmi les mélanges d'hydrates salins et les mélanges de paraffines.

12. Plaque de plâtre selon l'une des revendications 1 à 11, dans laquelle à l'intérieur de la plaque de plâtre sont utilisés des contenants avec différents matériaux à changement de phase.

13. Plaque de plâtre selon l'une des revendications 1 à 12, dans laquelle sont contenus des dispositifs grâce auxquels les contenants peuvent être régénérés.

14. Plaque de plâtre selon l'une des revendications 1 à 13, dans laquelle les contenants sont scellés ou mastiqués dans les ouvertures de la plaque de plâtre.

15. Utilisation d'une plaque de plâtre selon l'une des revendications 1 à 14 pour la climatisation de bâtiments.
